# FASCICULE DE BREVET EUROPEEN

(11) **EP 0 794 051 B1**
(45) Date de publication et mention de la délivrance du brevet: **04.06.2003**
(21) Numéro de dépôt: 97400481.4
(22) Date de dépôt: 03.03.1997
(51) Int. Cl.: B32B 3/12, B29C 51/30, B60R 13/00, B60N 2/44

(54) **Moule de formage pour un empilement composite, procédé de fabrication et produit résultant**
Form für eine gestapelte Mehrschichtstruktur, Herstellungsverfahren und hergestelltes Produkt
Forming mould for a stacked multilayered structure, process of manufacturing and manufactured product

(30) Priorité: 04.03.1996 FR 9602684
(43) Date de publication de la demande: 10.09.1997
(73) Titulaire: PEGUFORM FRANCE, 01100 Oyonnax (FR)
(72) Inventeur: Hochet, Nicolas, 49220 Le Lion D'Angers (FR)
(74) Mandataire: Martin, Jean-Jacques

(56) Documents cités:
- EP-A- 0 649 736
- DE-A- 3 444 321
- DE-A- 4 118 286
- US-A- 3 196 533
- US-A- 3 995 984
- PATENT ABSTRACTS OF JAPAN vol. 007, no. 016 (M-187), 22 Janvier 1983 & JP 57 173126 A (NISSAN JIDOSHA KK;OTHERS: 01), 25 Octobre 1982,

## Description

La présente invention concerne les moules de formage pour empilements composites avec âme alvéolaire, et les pièces réalisées au moyen de ces moules.

On connaît d'après le document DE-34 44321 un moule de formage pour un empilement comprenant une âme alvéolaire. Ce moule comprend un poinçon et une matrice mobiles relativement, entre lesquels on dispose l'empilement à former. Le rapprochement du poinçon de la matrice assure le pressage à chaud de l'empilement en vue notamment de fixer entre elles les différentes couches de l'empilement. Le poinçon présente une avancée ayant une face plane et comprenant des reliefs à faces courbes s'étendant en saillie de l'avancée. La matrice présente une cavité adaptée à recevoir l'avancée avec les reliefs. Durant le pressage, l'avancée et les reliefs écrasent et déforment certaines zones de l'empilement. La pièce présente après formage une forme généralement plane d'un bord à l'autre de la pièce, les bords ayant été écrasés suivant leur épaisseur, les faces de la pièce présentant des zones courbes à faible rayon de courbure, différentes d'une face à l'autre. Une pièce de ce type peut être employée dans de nombreux domaines de l'industrie, par exemple en automobile. L'âme alvéolaire, par exemple en nids d'abeilles, confère à la pièce une grande rigidité pour un poids modéré.

Toutefois, la pièce issue de ce formage présente un bord écrasé dont le chant constituant le pourtour de la pièce a une forme imprécise et irrégulière, visible des deux côtés de la pièce. Ce bord nuit à l'esthétique de la pièce, est encombrant, relativement fragile et ne permet pas un positionnement ultérieur fiable de la pièce en butée contre un élément de son environnement.

Un but de l'invention est de fournir un moule permettant de former une pièce du type précité en lui donnant un bord esthétiquement acceptable, moins encombrant, plus robuste et facilitant le positionnement ultérieur de la pièce.

En vue de la réalisation de ce but, on prévoit selon l'invention un moule de formage pour un empilement comprenant une âme alvéolaire, le moule comportant un poinçon et une matrice mobiles relativement à coulissement suivant une direction de coulissement,
le poinçon comportant une avancée présentant une face frontale sensiblement plane perpendiculaire à la direction de coulissement, et au moins un relief s'étendant en saillie de cette face,
la matrice présentant une cavité adaptée à recevoir l'avancée, ayant un fond sensiblement plan parallèle à la face frontale et adapté à s'étendre en regard de la face frontale, la cavité ayant une face latérale et une zone de surface courbe s'étendant entre le fond et la face latérale,
le relief étant disposé pour s'étendre au voisinage de la zone de surface courbe et de la face latérale lorsque l'avancée est reçue dans la cavité, la face latérale de la cavité étant plane et perpendiculaire au fond.

Lors du rapprochement mutuel des deux parties de moule pour le formage d'une pièce, le relief en saillie sollicite et écrase localement l'empilement composite pour le forcer à épouser la forme de la zone de surface courbe de la cavité. Même si le rayon de courbure de la zone de surface courbe est très faible, on obtient sur la pièce une zone de surface courbe de même rayon de courbure. On peut par exemple donner à la zone de surface courbe de la cavité un rayon de courbure inférieur à l'épaisseur de la pièce, pour obtenir sur la pièce une zone de rayon de courbure inférieur à cette épaisseur.

De plus, la face latérale plane de la cavité coopère avec le relief pour déformer et faire basculer localement le bord de l'empilement avec l'âme alvéolaire de façon à définir sur ce bord une face latérale externe plane perpendiculaire au plan général de la pièce et s'étendant dans le prolongement de la zone de surface courbe. Cette disposition de la face latérale externe du bord dissimule le chant de la pièce à la vue depuis un côté de la pièce, ce qui améliore l'aspect de la pièce, notamment de ce côté. De plus, l'encombrement du bord ainsi formé est faible. En outre, le bord est plus robuste. Par ailleurs, cette face externe du bord a une position précisément définie et reproductible, et peut être utilisée pour positionner la pièce en butée par rapport à un autre élément, sans ou avant fixation de la pièce à cet élément.

Cette face latérale permet par exemple de réaliser entre la pièce et un autre élément un accostage esthétiquement acceptable du fait de la zone de surface courbe et assurant en soi un bon positionnement de la pièce. En outre, le relief définit une goulotte contiguë au relief.

Avantageusement, le relief présente une face latérale externe plane perpendiculaire à la face frontale et adaptée à s'étendre en regard de la face latérale de la cavité lorsque l'avancée est reçue dans la cavité.

Ainsi, ce moule est adapté à presser le bord de l'empilement avec l'âme alvéolaire entre la face latérale de l'avancée et la face latérale du relief qui sont toutes deux planes, parallèles entre elles et perpendiculaires au fond. On peut ainsi presser ou écraser ce bord suivant une direction perpendiculaire au plan général de la pièce, et donc réduire son épaisseur suivant cette direction. De cette façon, on donne à la face interne du bord une forme précise plane perpendiculaire au fond, de sorte que cette face peut être utilisée comme référence pour le positionnement d'un élément dans la goulotte délimitée dans la pièce par ce bord et formée par le relief.

Avantageusement, le relief est disposé de sorte que, lorsque l'avancée est reçue dans la cavité, le relief est séparé de la face latérale de la cavité par une distance inférieure à une hauteur du relief.

Avantageusement, l'avancée présente une face latérale plane parallèle à la face latérale de la cavité et adaptée à venir en contact avec la face latérale de la cavité lorsque l'avancée est reçue dans la cavité.

Ainsi, la venue en contact mutuel de ces deux faces produit un effet de tranchage en cisaille qui provoque la coupe des excédents d'empilement et notamment d'âme alvéolaire s'étendant au-delà du bord de la pièce. Cette coupe est effectuée en même temps que le formage de la pièce, de sorte que le formage dissimule au moins en partie la trace de cette coupe sur le chant de la pièce. L'étape de formage et l'étape de coupe étant simultanées, le processus de fabrication de la pièce est plus rapide.

Avantageusement, la matrice comporte un relief s'étendant en saillie du fond et adapté à s'étendre au voisinage du relief de l'avancée lorsque l'avancée est reçue dans la cavité, de sorte que le relief de l'avancée est interposé entre le relief de la cavité et la face latérale de la cavité.

Ainsi, le relief de la cavité et le relief de l'avancée coopèrent mutuellement pour écraser entre eux l'empilement avec l'âme alvéolaire. De ce fait, l'âme alvéolaire épouse plus précisément la forme du premier relief de l'avancée, de sorte que la goulotte définie par celui-ci a une forme plus précise et reproductible. Cette goulotte peut donc être utilisée pour de nombreuses applications mécaniques, par exemple pour un appui ou pour loger un élément. De plus, le relief de la cavité définit une deuxième goulotte sur une face de la pièce opposée à la face portant la première goulotte.

Avantageusement, l'avancée comporte un deuxième relief s'étendant en saillie de la face frontale et disposé au voisinage du premier relief de l'avancée de sorte que, lorsque l'avancée est reçue dans la cavité, le relief de la cavité est interposé entre les deux reliefs de l'avancée.

Ainsi, le deuxième relief de l'avancée et le relief de la cavité coopèrent entre eux pour presser et écraser entre eux l'empilement avec l'âme alvéolaire. De façon analogue, l'âme alvéolaire épouse plus précisément la forme du relief de la cavité, de sorte que la deuxième goulotte est formée de façon précise et reproductible. Le deuxième relief de l'avancée définit une deuxième goulotte sur la face de la pièce portant la première goulotte.

Avantageusement, l'un au moins des reliefs présente une face latérale plane perpendiculaire à la face frontale ou au fond, et adaptée à s'étendre en regard d'une face latérale de l'un des reliefs lorsque l'avancée est reçue dans la cavité.

Ainsi, la face de goulotte définie par cette face latérale du relief est plane et perpendiculaire au plan de la pièce et se prête donc à de nombreuses applications mécaniques.

Avantageusement, deux des reliefs présentent une face latérale plane perpendiculaire à la face frontale ou au fond et adaptées à s'étendre en regard l'une de l'autre de sorte que, lorsque l'avancée est reçue dans la cavité, ces deux faces sont séparées mutuellement par une distance perpendiculairement au fond inférieure à une hauteur de l'un au moins des reliefs.

Avantageusement, l'un au moins des reliefs présente une zone de surface courbe s'étendant entre une face latérale du relief, et le fond de la cavité ou la face frontale, cette zone de surface courbe étant adaptée à s'étendre en regard de l'un des reliefs lorsque l'avancée est reçue dans la cavité.

Ainsi, la zone de surface courbe et le relief adapté à s'étendre en regard sont adaptés à presser l'empilement avec l'âme alvéolaire pour donner à une zone de la pièce une forme courbe ayant un rayon de courbure prédéterminé correspondant à celui de la zone de surface courbe.

Avantageusement, le ou l'un au moins des reliefs présente un sommet plan perpendiculaire à la direction de coulissement.

Ainsi, ce sommet réalise un écrasement local important de l'âme alvéolaire, améliorant la précision de la forme de la goulotte associée, et notamment donnant à cette goulotte un fond plat parallèle au plan général de la pièce.

Avantageusement, le ou l'un au moins des reliefs a une largeur inférieure à une hauteur du relief.

Ainsi, on augmente la contrainte de pressage exercée localement sur l'âme.

Avantageusement, le ou l'un au moins des reliefs présente une arête contiguë à un sommet du relief et à une face latérale du relief, cette arête ayant un rayon de courbure inférieur à 0,5 fois une hauteur du relief et étant adaptée à venir en regard d'une zone de surface courbe du moule lorsque l'avancée est reçue dans la cavité.

Ainsi, cette arête définit une zone de surface de courbure correspondante entre le fond et la face latérale de la goulotte. On augmente ainsi l'espace délimité par la goulotte, pour une même largeur et une même profondeur de celle-ci.

On prévoit également selon l'invention un procédé de fabrication d'une pièce comportant un empilement comprenant une âme alvéolaire, au moyen d'un moule selon l'invention, dans lequel on forme la pièce avec le moule, le moule étant à température ambiante avant installation de l'empilement dans le moule.

Dans le document DE-34 44321 précité, le moule comporte en propre des moyens de chauffage, de sorte qu'on forme la pièce à une température supérieure à la température ambiante. Or, compte tenu de la forme de ce moule, on obtient parfois un chauffage inégal des différentes zones du moule, ce qui peut nuire à la qualité du formage de la pièce. Avec le procédé selon l'invention, on évite cet inconvénient. On pourra avantageusement préchauffer l'empilement avant son introduction dans le moule.

On prévoit en outre selon l'invention une pièce, notamment pour véhicule, comportant un empilement comprenant une âme alvéolaire, la pièce ayant une forme générale plane et présentant une première face et une deuxième face sensiblement planes et opposées l'une à l'autre de part et d'autre de la pièce, la pièce présentant une zone de surface courbe contiguë à la première face et à un bord de la pièce, et une goulotte s'étendant dans la deuxième face au voisinage de ce bord en direction de la première face, le bord présentant une face latérale externe plane perpendiculaire à la première face et s'étendant dans le prolongement de la zone de surface courbe.

Cette pièce peut être obtenue au moyen du procédé selon l'invention.

Avantageusement, la goulotte présente une face latérale interne plane parallèle à la face latérale externe du bord, opposée à celle-ci de part et d'autre du bord, et constituant une face interne du bord.

Avantageusement, les faces latérales externe et interne du bord sont séparées l'une de l'autre par une distance inférieure à une plus grande épaisseur de la pièce mesurée entre les première et deuxième faces de la pièce.

Ainsi, ce bord est particulièrement mince et robuste et se prête de façon fiable à de nombreuses applications mécaniques.

Avantageusement, les faces latérales externe et interne du bord sont séparées l'une de l'autre par une distance inférieure à une profondeur de la goulotte.

Avantageusement, la pièce comporte une goulotte s'étendant dans la première face en direction de la deuxième face au voisinage de la première goulotte, la goulotte de la deuxième face étant interposée entre le bord de la pièce et la goulotte de la première face.

Avantageusement, la pièce comporte une deuxième goulotte s'étendant dans la deuxième face en direction de la première face au voisinage de la première goulotte, la goulotte de la première face étant interposée entre les deux goulottes de la deuxième face.

Avantageusement, au moins deux des goulottes sont séparées l'une de l'autre perpendiculairement aux faces de la pièce par une distance inférieure à une plus grande épaisseur de la pièce mesurée entre les première et deuxième faces de la pièce.

Avantageusement, au moins l'une des goulottes présente une face latérale interne plane perpendiculaire aux faces de la pièce.

Avantageusement, la ou au moins l'une des goulottes présente un fond plat.

Avantageusement, la ou au moins l'une des goulottes présente une zone de surface courbe s'étendant entre un fond de la goulotte et une face latérale de la goulotte, cette zone ayant un rayon de courbure inférieur à 0,5 fois une profondeur de la goulotte.

Avantageusement, le bord est un bord terminal de la pièce.

On prévoit par ailleurs selon l'invention un siège pour véhicule automobile comprenant une pièce selon l'invention.

On prévoit également selon l'invention un panneau de coffre ou de plancher pour véhicule automobile, comprenant une pièce selon l'invention.

D'autres caractéristiques et avantages de l'invention apparaîtront encore dans la description qui va suivre de trois modes préférés de réalisation et d'une variante donnés à titre d'exemples non limitatifs. Aux dessins annexés :
- la figure 1 est une vue en coupe transversale d'un moule de formage selon un premier mode de réalisation de l'invention en position ouverte ;
- la figure 2 est une vue agrandie du détail D de la figure 1 ;
- la figure 3 est une vue agrandie du détail E de la figure 1 ;
- la figure 4 est une vue analogue à la figure 1 montrant le moule en position fermée ;
- la figure 5 est une vue en perspective de l'avancée de la première partie du moule ;
- la figure 6 est une vue en coupe transversale de l'empilement permettant de réaliser une pièce selon le mode de réalisation de l'invention ;
- les figures 7 et 8 sont des vues en perspective d'une pièce selon le mode de réalisation de l'invention fabriquée au moyen de ce moule montrant respectivement une première et une deuxième faces de cette pièce ;
- la figure 9 est une vue analogue à la figure 2 montrant une variante de réalisation de ce moule ;
- la figure 10 est une vue partielle en coupe transversale de deux pièces identiques à celle des figures 7 et 8, montrant un exemple préféré de positionnement des deux pièces entre elles ;
- la figure 11 est une vue partielle en coupe transversale d'un moule de formage selon un deuxième mode de réalisation de l'invention, en position fermée ;
- la figure 12 est une vue partielle en coupe transversale d'une pièce selon le deuxième mode de réalisation de l'invention fabriquée au moyen de ce moule ;
- la figure 13 est une vue partielle en *coupe* transversale d'un dossier de siège de véhicule automobile selon le deuxième mode de réalisation de l'invention comportant la pièce de la figure 12 ;
- les figures 14 et 15 sont deux vues partielles en coupe transversale d'une pièce de la figure 12 formant un panneau de plancher ou de coffre de véhicule automobile, et illustrant deux montages respectifs de cette pièce ;
- la figure 16 est une vue partielle en coupe transversale d'un moule de formage selon un troisième mode de réalisation de l'invention, en position fermée ;
- la figure 17 est une vue partielle en coupe transversale d'une pièce selon le troisième mode de réalisation de l'invention fabriquée au moyen de ce moule; et
- la figure 18 est une vue partielle en coupe transversale d'une pièce selon la figure 17 formant un panneau de plancher ou de coffre de véhicule automobile, et illustrant un montage de cette pièce.

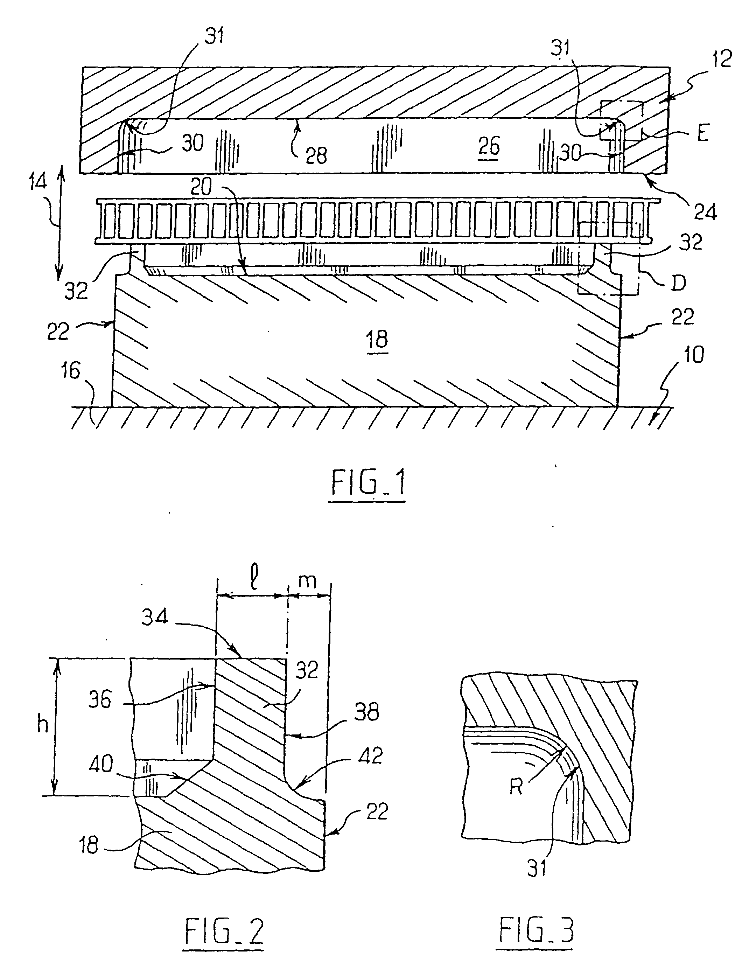

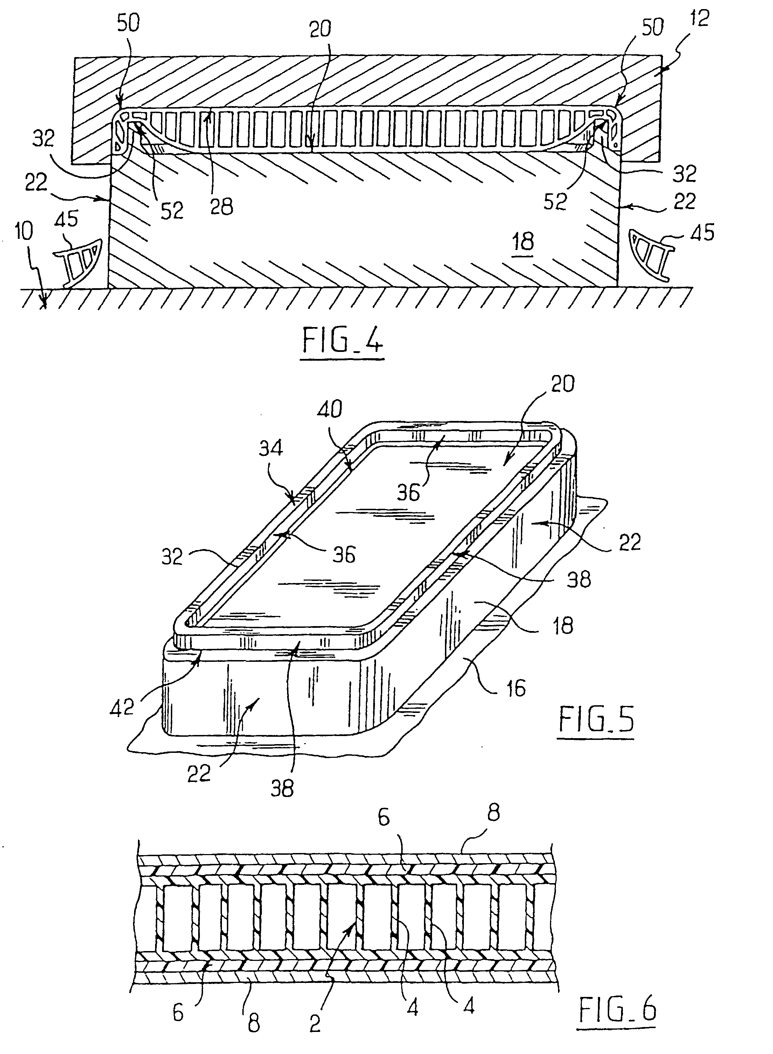

Le moule de formage selon un premier mode de réalisation de l'invention représenté aux figures 1 à 5 est destiné à mettre en forme par pressage l'empilement composite de la figure 6 et à assembler entre elles les différentes couches qui le constituent. Cet empilement comporte une âme 2 constituée d'alvéoles 4. En l'espèce, les alvéoles ont une forme en plan hexagonale et présentent une géométrie en nid d'abeille classique. L'âme 2 présente deux faces opposées parallèles entre elles et perpendiculaires à l'axe des alvéoles. L'empilement comporte également deux peaux 6 recouvrant respectivement les faces de l'âme. L'âme 2 et les deux peaux 6 sont constituées en matériaux thermoplastiques classiques. L'empilement comporte en outre deux couches 8 de revêtement externe tissé ou non-tissé recouvrant respectivement les peaux 6 et constituant les faces externes de l'empilement. La distance séparant les deux faces externes de l'empilement définit l'épaisseur de ce dernier. En l'espèce, cette épaisseur est égale à 17 mm.

Le moule comporte deux parties de moule constituées respectivement par un poinçon 10 et une matrice 12. Ces parties sont mobiles en translation l'une relativement à l'autre suivant la direction de coulissement indiquée par la flèche 14. En l'espèce, le poinçon 10 est fixe. Le poinçon 10 comporte un corps 16 et une avancée 18 s'étendant en saillie de ce corps. L'avancée 18 a une forme générale de parallélépipède rectangle. Elle présente une face frontale plane 20 opposée au corps 16 et perpendiculaire à la direction de coulissement, et quatre faces latérales planes 22 perpendiculaires à la face plane 20 et délimitant celle-ci. La matrice 12 présente une face plane 24 s'étendant en regard du poinçon. La matrice présente une cavité 26 en forme générale de parallélépipède rectangle, débouchant sur cette face 24. La cavité 26 présente un fond 28 s'étendant en regard de la face plane 20 de l'avancée, parallèlement à cette face 20. La cavité présente également quatre faces latérales planes 30 perpendiculaires au fond 28 et respectivement coplanaires aux quatre faces latérales 22 de l'avancée. La cavité 26 est ainsi adaptée à recevoir en partie l'avancée 18. Le moule est agencé pour pouvoir rapprocher mutuellement le poinçon et la matrice jusqu'à mettre en contact et partiellement en regard les faces latérales 30 de la cavité avec les faces latérales 22 de l'avancée en position fermée du moule. En position fermée, la face plane 20 de l'avancée s'étend à une distance du fond 28 de la cavité légèrement inférieure à l'épaisseur de l'empilement de la figure 6, en vue notamment de compresser l'empilement. Cette distance définit l'épaisseur de la pièce à fabriquer. En l'espèce, cette distance vaut 16 mm et la pièce sortant du moule aura donc ici une épaisseur de 16 mm.

Au niveau du fond, la matrice 12 présente une zone de surface courbe 31 constituant la jonction entre le fond 28 et chacune des faces latérales 30 de la cavité. Cette zone de surface courbe 31 a un profil en quart de cercle s'étendant dans la continuité du fond 28 et des faces latérales 30. Ce profil a ici un rayon de courbure R inférieur à l'épaisseur de la pièce (et donc à l'épaisseur de l'empilement). Ce rayon de courbure est avantageusement inférieur à 0,7 fois cette épaisseur et de préférence inférieur à 0,4 fois cette épaisseur. En l'espèce, ce rayon est égal à 5 mm. Lorsque la cavité est vue en plan, cette zone de surface courbe 31 a une forme générale allongée continue rectangulaire, les angles du rectangle étant arrondis.

Le poinçon comporte un relief 32 s'étendant en saillie de la face frontale plane 20 de l'avancée, en regard du fond 28 de la cavité. En référence à la figure 5, ce relief a une forme en plan allongée continue rectangulaire à angles arrondis. Cette forme est homothétique de la forme en plan de l'avancée. Le relief 32 est adjacent à chacune des faces latérales 22 de l'avancée. En référence à la figure 2, ce relief a un profil en coupe transversale de forme générale rectangulaire. Il présente un sommet plan 34 parallèle à la face plane 20 et au fond 28, et des faces latérales respectivement interne 36 et externe 38 perpendiculaires à la face plane 20 et au sommet 34. La jonction entre chaque face interne 36 et la face plane 20 est constituée par un chanfrein 40. La jonction entre chaque face externe 38 et la face plane 20 est constituée par une zone de surface courbe 42 s'étendant en continuité avec ces deux faces. La jonction entre chaque face latérale 36, 38 et le sommet 34 est constitué par une arête ayant un rayon de courbure inférieur à 0,5 fois une hauteur h du relief. De préférence, cette arête est sensiblement à angle droit.

Le profil du relief a une hauteur h par exemple supérieure à 0,4 fois l'épaisseur de la pièce, voire supérieure à 0,7 fois cette épaisseur. En l'espèce, cette hauteur est égale à l'épaisseur de la pièce à fabriquer diminuée du rayon de courbure de la zone 31 de la cavité, de sorte que la distance du relief au fond est égale au rayon de courbure. En l'espèce, cette hauteur vaut 12 mm. Le profil du relief a une largeur 1 au plus égale à sa hauteur h. En l'espèce, cette largeur est égale à 5 mm. En position fermée du moule, chaque face externe 38 s'étend en regard d'une face latérale 30 de la cavité, parallèlement à celle-ci. La distance entre ces deux faces est alors inférieure à la hauteur h du relief. La distance m séparant chaque facette extérieure 38 de la face latérale 22 associée de l'avancée est par exemple inférieure à 0,7 fois l'épaisseur de la pièce, voire inférieure à 0,4 fois cette épaisseur. En l'espèce, cette distance est égale au rayon de courbure et à la distance du relief au fond, la distance m étant égale à 5 mm. La même distance sépare donc chaque face externe 38 de la face latérale 30 associée de la cavité en position fermée du moule. En l'espèce, le moule est donc agencé de sorte qu'en position fermée, le sommet 34 du relief se trouve à 5 mm du fond 28 de la cavité. Dans cette position, l'arète à angle droit constituant la jonction entre le sommet 34 du relief et chaque face externe 38 occupe la position du centre de courbure de la zone de surface courbe 31, à 5 mm de celle-ci. Le relief 32 se trouve ainsi au voisinage de la zone de surface courbe 31 lorsque les deux parties de moule sont rapprochées relativement.

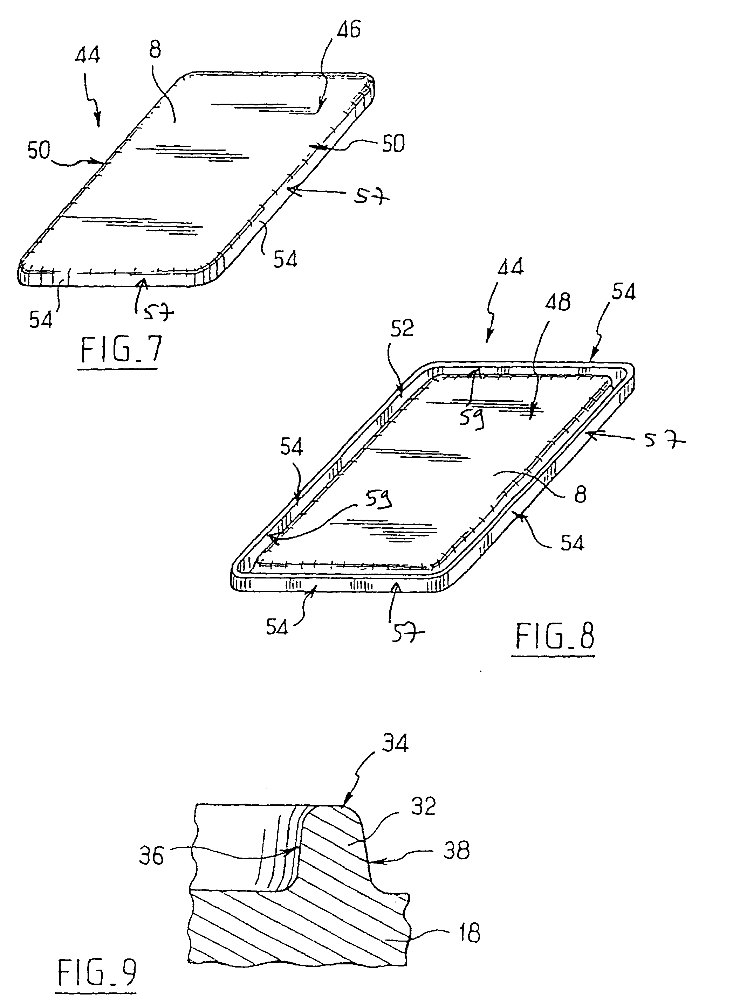

Ce moule permet de réaliser la pièce 44 représentée de façon simplifiée aux figures 7 et 8. Cette pièce sera par exemple une tablette arrière pour habitacle de véhicule automobile ou un plancher de coffre.

Tout d'abord, on chauffe les deux peaux 6 de l'empilement à une température adaptée, par exemple conformément à l'enseignement du document EP-0 649 736 A1 précité. Puis on réalise l'empilement de la figure 6. En référence à la figure 1, le moule étant ouvert avec la matrice 12 distante du poinçon 10, on dispose l'empilement sur le poinçon, la face inférieure de l'empilement étant en appui sur le sommet 34 du relief, le moule étant à température ambiante avant installation de l'empilement dans le moule. On commande ensuite la fermeture du moule par déplacement de la matrice en direction du poinçon. Lorsque les faces latérales 30 de la cavité viennent en contact avec les faces latérales 22 de l'avancée, ces faces écrasent localement l'empilement et réalisent la coupe des excédents 45 de l'empilement s'étendant à l'extérieur du moule. Ces excédents chutent sur le corps 16 du poinçon. Après introduction de l'avancée dans la cavité, la région centrale de l'empilement est pressée entre la face plane 20 de l'avancée et le fond 28 de la cavité.

Simultanément, les régions périphériques de l'empilement sont écrasées localement suivant la direction 14 entre le sommet du relief et le fond de la cavité. En outre, les régions de bord de l'empilement sont écrasées latéralement en basculant entre les faces externes 38 du relief et les faces latérales 30 de la cavité. Sur les régions périphériques et les régions de bord, cet écrasement ramène l'épaisseur de l'empilement suivant la direction d'écrasement à 5 mm environ. L'écrasement des régions de bord réalise les bords de la pièce. Le relief 32 en saillie de la face frontale plane 20 force l'empilement à épouser la courbure de la zone de surface courbe 31 de la cavité. Le moule peut être muni de moyens de refroidissement de l'empilement durant le pressage, conformément au document précité. On extrait enfin la pièce du moule. Son épaisseur vaut 16 mm.

En référence aux figures 4, 7 et 8, on obtient ainsi une pièce rectangulaire généralement plate comportant une âme alvéolaire, deux peaux recouvrant deux faces opposées de l'âme, et deux couches 8 de revêtement recouvrant ces peaux. La pièce présente une première 46 et une deuxième 48 faces planes parallèles entre elles et opposées l'une à l'autre, et quatre bords 54. Elle présente sur son pourtour une zone de surface courbe 50 au niveau de la première face 46, adjacente à celle-ci. Elle présente également un renfoncement 52, ou goulotte au niveau de la deuxième face 48, adjacent à celle-ci, s'étendant en direction de la première face et au voisinage de la zone de surface courbe 50. La zone de surface courbe et la goulotte ont été respectivement générées par la zone 31 de la cavité et le relief 32, en combinaison l'un avec l'autre. La zone de surface courbe 50 de la pièce présente en coupe transversale un rayon de courbure égal à celui de la zone de surface courbe 31 de la cavité, et en l'espèce égal à 5 millimètres. L'épaisseur de la pièce au niveau de la goulotte est égale au rayon de courbure. La zone de surface courbe 50 et la goulotte 52 présentent une forme en plan identique respectivement à la forme en plan de la zone de surface courbe de la cavité et du relief. Notamment, la goulotte 52 présente une forme en plan allongée continue rectangulaire. Cette goulotte, ainsi que la zone 50, est adjacente aux bords 54 de la pièce. Ces bords sont repliés à 90° par rapport au plan général de la pièce et présentent une épaisseur inférieure à l'épaisseur de la pièce, par exemple égale à 3 ou 4 mm. La hauteur des bords est environ égale à l'épaisseur de la pièce. Les bords 54 présentent une face latérale externe plane 57 perpendiculaire aux faces 46 et 48 et s'étendant dans le prolongement de la zone de surface courbe 50, en continuité avec celle-ci.

La goulotte 52 présente une face latérale interne plane 59 parallèle à la face latérale externe 57 du bord 54, opposée à celle-ci de part et d'autre du bord 54 et constituant une face interne du bord.

Les faces latérales externe et interne du bord sont séparées l'une de l'autre par une distance inférieure à une plus grande épaisseur de la pièce mesurée entre les première et deuxième faces de la pièce.

De plus, les faces latérales externe et interne du bord sont séparées l'une de l'autre par une distance inférieure à une profondeur de la goulotte.

Ainsi, la goulotte 52 présente deux faces latérales internes planes perpendiculaires aux faces 46 et 48 de la pièce. La goulotte présente un fond plat.

De plus, la goulotte présente une zone de surface courbe s'étendant entre le fond et la face latérale 59 de la goulotte associée au bord, cette zone ayant un rayon de courbure inférieur à 0,5 fois la profondeur de la goulotte.

Le bord 54 est un bord terminal de la pièce.

Le moule selon l'invention permet ainsi de fabriquer une pièce à âme alvéolaire en réalisant des zones de surface courbe présentant un rayon de courbure inférieur à l'épaisseur de la pièce.

La figure 9 présente une variante de réalisation du moule. Le relief 32 présente cette fois en coupe transversale un profil de forme générale trapézoïdale, la base du relief étant constituée par celui des deux côtés parallèles du trapèze qui est plus large que l'autre. De plus, le sommet 34 du relief a un profil arrondi s'étendant dans le prolongement des faces latérales du relief. Ce sommet présente un côté dirigé vers le bord de l'avancée (à droite sur la figure), et un côté opposé à ce bord (à gauche sur la figure). Le côté dirigé vers le bord de l'avancée a un rayon de courbure plus grand que le côté opposé au bord. Cette variante réduit les risques d'amorce de rupture sur la structure composite lors du formage. Le sommet du relief pourra être arrondi seulement sur le côté dirigé vers le bord de l'avancée.

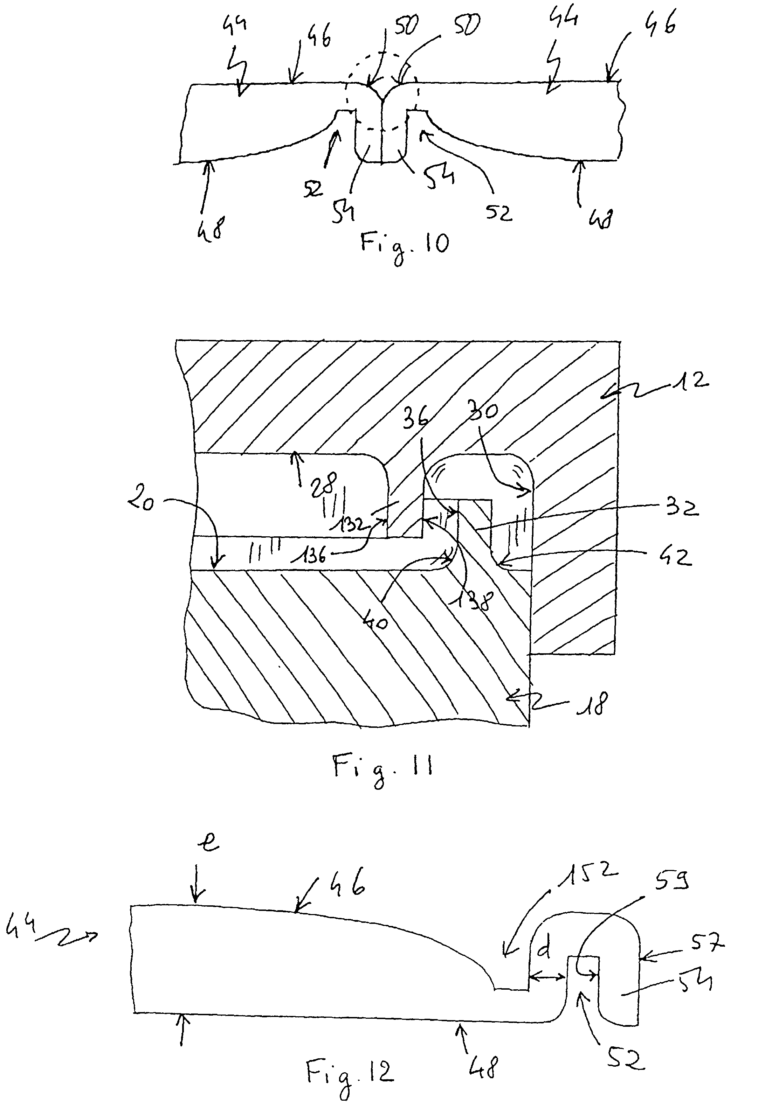

En référence à la figure 10, on peut par exemple utiliser deux pièces 44 identiques entre elles en disposant les deux pièces côte-à-côte avec les bords longitudinaux 54 ayant leurs faces latérales externes 57 en contact mutuel surface contre surface, les zones de surface courbe 50 étant mutuellement en regard et contiguës, les faces 46 et 48 des deux pièces étant mutuellement coplanaires. On réalise ainsi un accostage esthétiquement acceptable compte tenu du fait que les deux zones de surface courbes 50 sont contiguës, comme le signale le cercle en traits pointillés. De plus, les faces latérales externes 57 des bords 54 assurent un positionnement relatif précis et fiable des deux pièces.

Un deuxième mode de réalisation du moule est représenté à la figure 11. Le moule comporte un poinçon et une matrice généralement identiques à ceux du premier mode. Une première différence est que la zone 40 assurant la jonction entre la face frontale 20 de l'avancée et la face latérale interne 36 du relief 32 est cette fois de forme courbe, comme la zone 42 de l'autre côté du relief.

En outre, la matrice 12 comporte un relief 132 s'étendant en saillie du fond 28. Ce relief a une forme et des proportions généralement identiques à celles du relief 32 de l'avancée mis à part que le relief 132 a une forme en plan réduite par rapport à celle du relief 32, la forme en plan du relief 132 étant homothétique de celle du relief 32. Les profils des reliefs 32 et 132 sont identiques en forme et en dimensions. Le relief 132 présente une face latérale interne 136 et une face latérale externe 138, cette dernière s'étendant à une distance de la face latérale interne 30 de la cavité supérieure à la distance 1 + m séparant la face latérale interne 36 du relief 32 et la face latérale interne 30 de la cavité, et avantageusement comprise entre 3 x 1 et 4 x 1. Le relief 132 est adapté à s'étendre au voisinage du relief 32 de l'avancée 18 lorsque l'avancée est reçue dans la cavité, de sorte que le relief 32 de l'avancée est interposé entre le relief 132 de la cavité et la face latérale 30 de la cavité. La face latérale externe 138 du relief 132 est alors en regard et à distance de la face latérale interne 36 du relief 32. Dans cette position, ces deux faces sont séparées par une distance perpendiculairement au fond 28 qui est inférieure à la hauteur h. Dans cette position, la zone de surface courbe 40 du relief 32 est en regard de l'arête du sommet du relief 132 associée à la face latérale externe 138.

Le moule permet de former à partir d'un empilement tel que celui de la figure 6, une pièce 44 représentée à la figure 12. Cette pièce est généralement identique à celle des figures 7 et 8, mais elle présente une goulotte 152 s'étendant dans la première face 46 en direction de la deuxième face 48 au voisinage de la première goulotte 52, la goulotte 52 étant interposée entre le bord 54 et la goulotte 152. De plus, les deux reliefs ont écrasé localement entre eux l'empilement, de sorte que la goulotte 52 présente un fond plat parallèle au plan général de la pièce et deux faces latérales planes perpendiculaires à ce fond. Les deux goulottes sont séparées l'une de l'autre perpendiculairement au plan général de la pièce par une distance d inférieure à une plus grande épaisseur e de la pièce mesurée entre les faces 46, 48.

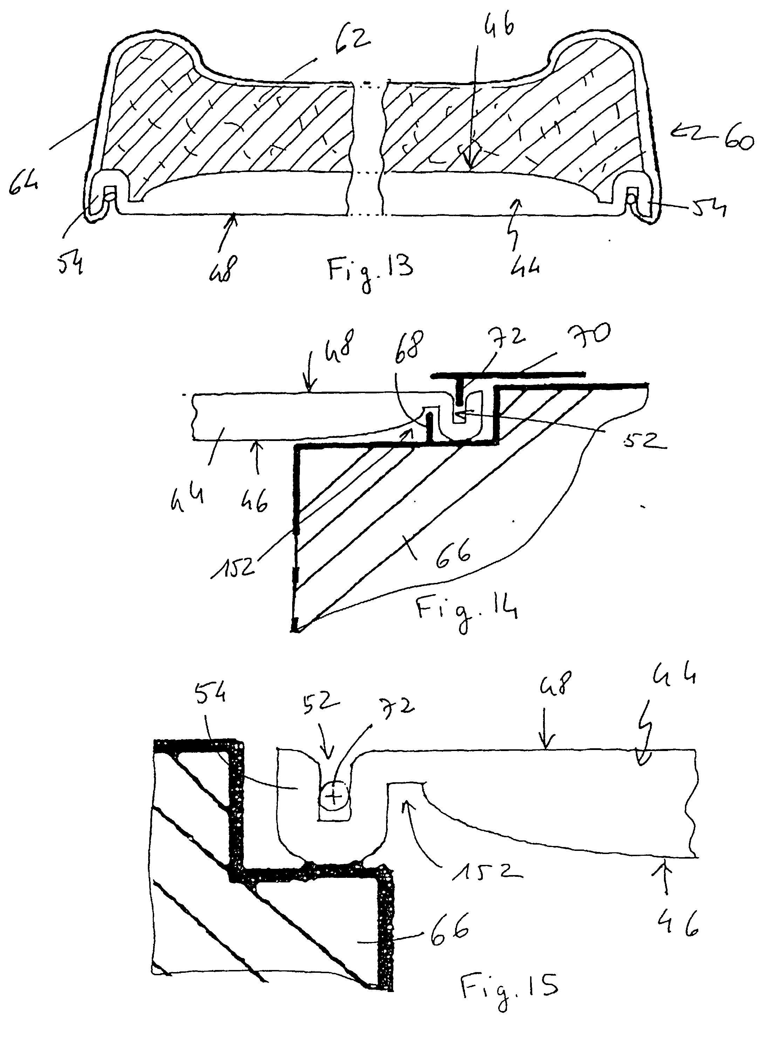

Une pièce 44 de ce type peut faire partie d'une assise ou d'un dossier de siège 60 de véhicule automobile tel que celui de la figure 13. Ce dossier comporte un bloc 62 de mousse alvéolaire synthétique disposée contre la face 46. Le dossier comporte une coiffe 64 en tissu disposée pour recouvrir tous les côtés du bloc de mousse 62, à l'exception de celui associé à la pièce 44. La coiffe 64 comporte un joint profilé circonférenciel en matière plastique auquel est fixé le bord du tissu. Le joint est fixé au dossier du siège en étant inséré à force dans la goulotte 52, sur toute la longueur de celle-ci, sur ses quatre segments. La coiffe 64 recouvre le bord 54 de la pièce 44, notamment la face latérale externe 57, qu'elle dissimule ainsi à la vue.

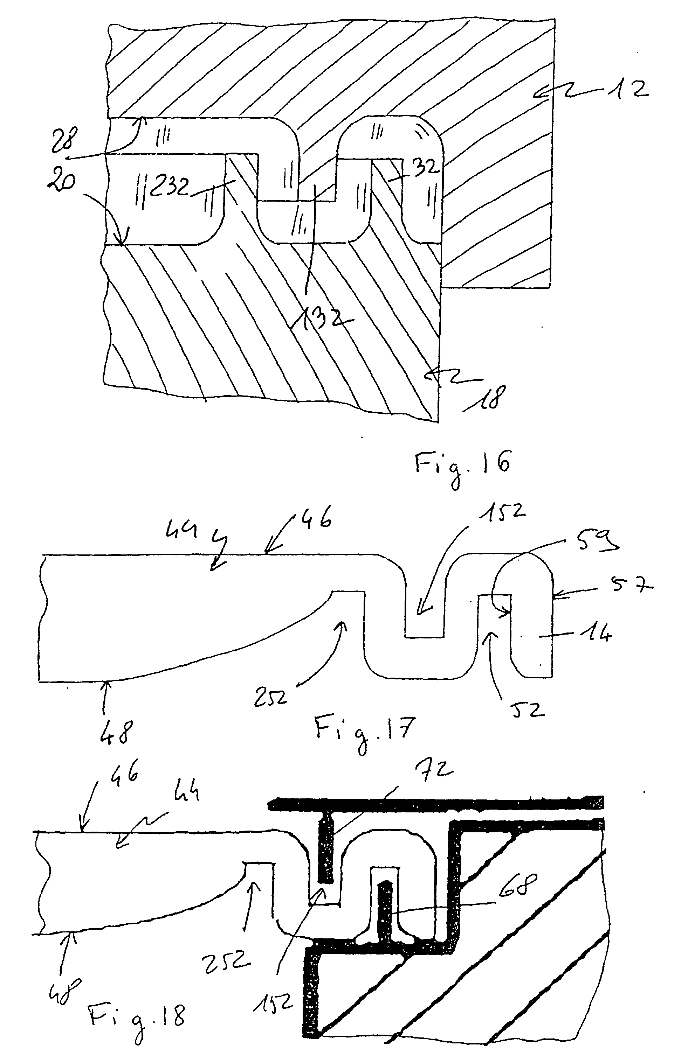

Sur la figure 14, la pièce 44 est employée pour former un panneau pour coffre ou habitacle de véhicule automobile. Le véhicule comporte un élément de structure 66 définissant un épaulement de forme rectangulaire en plan dans lequel est placée la pièce 44, avec la face 48 opposée à l'épaulement. L'épaulement comporte sur une face d'appui parallèle au plan général de la pièce une nervure longitudinale rectiligne ou saillie 68 sur laquelle vient s'enfiler la goulotte 152. On dispose ensuite du côté de la face 48 une contre-platine 70 fixée à l'élément 66 et en contact avec celui-ci. Cette contre-platine 70 comporte elle aussi une nervure longitudinale rectiligne ou saillie 72 destinée à pénétrer dans la goulotte 52. La contre-platine masque à la vue le bord 54 de la pièce. La pièce 54 est ainsi fixée et positionnée précisément sans avoir à percer ou coller la pièce 44.

La figure 15 illustre un agencement analogue dans lequel l'épaulement de l'élément 66 est dépourvu de nervure. La pièce 44 est disposée dans l'épaulement comme précédemment, l'une des goulottes 52 de la pièce recevant un axe 72 fixé à l'élément 66 en vue de réaliser une liaison à pivotement de la pièce 44 par rapport à l'élément 66.

La figure 16 montre un troisième mode de réalisation du moule. Cette fois, l'avancée 18 comporte un deuxième relief 232 s'étendant en saillie de la face frontale 20 et disposé au voisinage du premier relief 32 de l'avancée. Ce deuxième relief a un profil de même forme et de mêmes dimensions que le profil du premier relief 32. Sa forme en plan est homothétique de celle du premier relief. Il est disposé de sorte que lorsque l'avancée 18 est reçue dans la cavité 26, le relief 132 de la cavité est interposé entre les reliefs 32 et 232 de l'avancée en étant équidistant de ceux-ci.

La figure 17 montre une pièce 44 réalisée au moyen de ce moule. La goulotte 152 a un fond plat parallèle au plan général de la pièce et des faces latérales perpendiculaires à ce fond. De plus, cette pièce comporte une deuxième goulotte 252 s'étendant dans la deuxième face 48 en direction de la première face 46 au voisinage de la première goulotte 52, la goulotte 152 étant interposée entre les goulottes 52 et 252. La distance entre les goulottes 52 et 152 est identique à la distance entre les goulottes 152 et 252.

Cette pièce 44 peut être utilisée dans un agencement du type de celui de la figure 18 qui est analogue à celui de la figure 14. Cette fois, la face 46 est opposée à l'épaulement, la nervure 68 est reçue dans la goulotte 52 et la nervure 72 est reçue dans la goulotte 152. Cette pièce 44 permet de réaliser un épaulement de dimensions réduites dans le plan de la pièce.

La pièce selon l'invention pourra notamment être destinée à tout type de véhicule terrestre, maritime ou aérien.

## Revendications

1. Moule de formage pour un empilement comprenant une âme alvéolaire, le moule comportant un poinçon (10) et une matrice (12) mobiles relativement à coulissement suivant une direction de coulissement,
le poinçon (10) comportant une avancée (18) présentant une face frontale (20) sensiblement plane perpendiculaire à la direction de coulissement, et au moins un relief (32) s'étendant en saillie de cette face,
la matrice (12) présentant une cavité (26) adaptée à recevoir l'avancée, ayant un fond (28) sensiblement plan parallèle à la face frontale (20) et adapté à s'étendre en regard de la face frontale, la cavité ayant une face latérale (30) et une zone de surface courbe (31) s'étendant entre le fond et la face latérale,
le relief (32) étant disposé pour s'étendre au voisinage de la zone de surface courbe (31) et de la face latérale (30) lorsque l'avancée (18) est reçue dans la cavité (26), **caractérisé en ce que** la face latérale (30) de la cavité est plane et perpendiculaire au fond (28).

2. Moule selon la revendication 1, **caractérisé en ce que** le relief (32) présente une face latérale externe (38) plane perpendiculaire à la face frontale (20) et adaptée à s'étendre en regard de la face latérale (30) de la cavité lorsque l'avancée est reçue dans la cavité.

3. Moule selon la revendication 1 ou 2, **caractérisé en ce que** le relief (32) est disposé de sorte que, lorsque l'avancée est reçue dans la cavité, le relief est séparé de la face latérale (30) de la cavité par une distance (m) inférieure à une hauteur (h) du relief.

4. Moule selon l'une quelconque des revendications 1 à 3, **caractérisé en ce que** l'avancée présente une face latérale plane (22) parallèle à la face latérale (30) de la cavité et adaptée à venir en contact avec la face latérale de la cavité lorsque l'avancée est reçue dans la cavité.

5. Moule selon l'une quelconque des revendications 1 à 4, **caractérisé en ce que** la matrice (12) comporte un relief (132) s'étendant en saillie du fond (28) et adapté à s'étendre au voisinage du relief (32) de l'avancée lorsque l'avancée est reçue dans la cavité, de sorte que le relief (32) de l'avancée est interposé entre le relief (132) de la cavité et la face latérale (30) de la cavité.

6. Moule selon la revendication 5, **caractérisé en ce que** l'avancée (18) comporte un deuxième relief (232) s'étendant en saillie de la face frontale (20) et disposé au voisinage du premier relief (32) de l'avancée de sorte que, lorsque l'avancée est reçue dans la cavité, le relief (132) de la cavité est interposé entre les deux reliefs (32, 232) de l'avancée.

7. Moule selon l'une quelconque des revendications 5 à 6, **caractérisé en ce que** l'un au moins des reliefs présente une face latérale plane (36, 38) perpendiculaire à la face frontale (20) ou au fond (28), et adaptée à s'étendre en regard d'une face latérale de l'un des reliefs lorsque l'avancée est reçue dans la cavité.

8. Moule selon l'une quelconque des revendications 5 à 7, **caractérisé en ce que** deux des reliefs (32, 132, 232) présentent une face latérale plane perpendiculaire à la face frontale ou au fond et adaptées à s'étendre en regard l'une de l'autre de sorte que, lorsque l'avancée est reçue dans la cavité, ces deux faces sont séparées mutuellement par une distance perpendiculairement au fond inférieure à une hauteur (h) de l'un au moins des reliefs.

9. Moule selon l'une des revendications 1 à 8, **caractérisé en ce que** l'un au moins des reliefs (32, 132, 232) présente une zone de surface courbe (40, 42) s'étendant entre une face latérale (36, 38) du relief, et le fond (28) de la cavité ou la face frontale (20), cette zone de surface courbe étant adaptée à s'étendre en regard de l'un des reliefs lorsque l'avancée est reçue dans la cavité.

10. Moule selon l'une quelconque des revendications 1 à 9, **caractérisé en ce que** le ou l'un au moins des reliefs (32, 132, 232) présente un sommet (34) plan perpendiculaire à la direction de coulissement.

11. Moule selon l'une quelconque des revendications 1 à 10, **caractérisé en ce que** le ou l'un au moins des reliefs (32, 132, 232) a une largeur (1) inférieure à une hauteur (h) du relief.

12. Moule selon l'une quelconque des revendications 1 à 11, **caractérisé en ce que** le ou l'un au moins des reliefs (32, 132, 232) présente une arête contiguë à un sommet (34) du relief et à une face latérale (36, 38) du relief, cette arête ayant un rayon de courbure inférieur à 0,5 fois une hauteur du relief et étant adaptée à venir en regard d'une zone de surface courbe (31, 40) du moule lorsque l'avancée est reçue dans la cavité.

13. Procédé de fabrication d'une pièce comportant un empilement comprenant une âme alvéolaire, au moyen d'un moule selon l'une des revendications 1 à 12, **caractérisé en ce qu'**on forme la pièce avec le moule, le moule étant à tempérarure ambiante avant installation de l'empilement dans le moule.

14. Pièce (44), notamment pour véhicule, comportant un empilement comprenant une âme alvéolaire, la pièce ayant une forme générale plane et présentant une première face (46) et une deuxième face (48) sensiblement planes et opposées l'une à l'autre de part et d'autre de la pièce, la pièce présentant une zone de surface courbe (50) contiguë à la première face (48) et à un bord (54) de la pièce, et une goulotte (52) s'étendant dans la deuxième face (48) au voisinage de ce bord en direction de la première face, **caractérisée en ce que** le bord (54) présente une face latérale externe (57) plane perpendiculaire à la première face (46) et s'étendant dans le prolongement de la zone de surface courbe (50).

15. Pièce selon la revendication 14, **caractérisée en ce que** la goulotte (52) présente une face latérale interne (59) plane parallèle à la face latérale externe (57) du bord, opposée à celle-ci de part et d'autre du bord, et constituant une face interne du bord.

16. Pièce selon la revendication 15, **caractérisée en ce que** les faces latérales (57, 59) externe et interne du bord (54) sont séparées l'une de l'autre par une distance inférieure à une plus grande épaisseur (e) de la pièce mesurée entre les première et deuxième faces de la pièce.

17. Pièce selon la revendication 15 ou 16, **caractérisée en ce que** les faces latérales (57, 59) externe et interne du bord (54) sont séparées l'une de l'autre par une distance inférieure à une profondeur de la goulotte (52).

18. Pièce selon l'une quelconque des revendications 14 à 17, **caractérisée en ce que** la pièce comporte une goulotte (152) s'étendant dans la première face (46) en direction de la deuxième face (48) au voisinage de la première goulotte (52), la goulotte (152) de la deuxième face étant interposée entre le bord (54) de la pièce et la goulotte (52) de la première face.

19. Pièce selon la revendication 18, **caractérisée en ce que** la pièce comporte une deuxième goulotte (252) s'étendant dans la deuxième face (48) en direction de la première face (46) au voisinage de la première goulotte, la goulotte (152) de la première face étant interposée entre les deux goulottes (52, 252) de la deuxième face.

20. Pièce selon l'une quelconque des revendications 18 ou 19, **caractérisée en ce qu'**au moins deux des goulottes (52, 152, 252) sont séparées l'une de l'autre perpendiculairement aux faces de la pièce par une distance (d) inférieure à une plus grande épaisseur (e) de la pièce mesurée entre les première et deuxième faces de la pièce.

21. Pièce selon l'une quelconque des revendications 14 à 20, **caractérisée en ce que** la ou au moins l'une des goulottes présente une face latérale interne plane perpendiculaire aux faces de la pièce.

22. Pièce selon l'une quelconque des revendications 14 à 21, **caractérisée en ce que** la ou au moins l'une des goulottes présente un fond plat.

23. Pièce selon l'une quelconque des revendications 14 à 22, **caractérisée en ce que** la ou au moins l'une des goulottes présente une zone de surface courbe s'étendant entre un fond de la goulotte et une face latérale de la goulotte, cette zone ayant un rayon de courbure inférieur à 0,5 fois une profondeur de la goulotte.

24. Pièce selon l'une quelconque des revendications 14 à 23, **caractérisée en ce que** le bord (54) est un bord terminal de la pièce.

25. Siège pour véhicule automobile, **caractérisé en ce qu'**il comprend une pièce selon l'une des revendications 14 à 24.

26. Panneau de coffre ou de plancher pour véhicule automobile, **caractérisé en ce qu'**il comprend une pièce selon l'une des revendications 14 à 24.

## Patentansprüche

1. Form zum Preßformen für ein stapelförmiges Material mit einem wabenförmigen Kern, wobei die Form einen Stempel (10) und eine Matrize (12) aufweist, die relativ zu einer Gleitschiene entlang einer Gleitrichtung beweglich sind, wobei
der Stempel (10) ein vorstehendes Teil (18) umfaßt, das eine Stirnfläche (20), die im wesentlichen eben und senkrecht zur Gleitrichtung ist und mindestens eine Erhöhung (32) aufweist, die sich von dieser Seite hervorstehend erstreckt,
die Matrize (12) eine Aufnahme (26) aufweist, die ausgebildet ist, das vorstehende Teil aufzunehmen und einen im wesentlichen ebenen und zur Stirnseite (20) parallelen Boden hat und ausgebildet ist, sich gegenüber der Stirnseite zu erstrecken, wobei die Aufnahme eine Seitenwand (30) und einen Bereich einer gekrümmten Fläche (31) hat, der sich zwischen dem Boden und der Seitenwand erstreckt,
die Erhöhung (32) angeordnet ist, um sich in der Nähe des Bereichs der gekrümmten Fläche (31) und der Seitenwand (30) zu erstrecken, wenn das vorstehende Teil (18) in der Aufnahme (26) aufgenommen ist,
**dadurch gekennzeichnet, daß** die Seitenwand (30) der Aufnahme eben und senkrecht zum Boden (28) ist.

2. Form nach Anspruch 1, **dadurch gekennzeichnet, daß** die Erhöhung (32) eine äußere Seitenwand (38) aufweist, die eben und zur Stirnseite (20) senkrecht ist und ausgebildet ist, sich gegenüber der Seitenwand (30) der Aufnahme zu erstrecken, wenn das vorstehende Teil in der Aufnahme aufgenommen ist.

3. Form nach Anspruch 1 oder 2, **dadurch gekennzeichnet, daß** die Erhöhung (32) derart angeordnet ist, daß, wenn das vorstehende Teil in der Aufnahme aufgenommen ist, die Erhöhung von der Seitenwand (30) der Aufnahme durch einen Abstand (m) kleiner als eine Höhe (h) der Erhöhung getrennt ist.

4. Form nach einem der Ansprüche 1 bis 3, **dadurch gekennzeichnet, daß** das vorstehende Teil eine ebene Seitenwand (22) aufweist, die zur Seitenwand (30) der Aufnahme parallel ist und ausgebildet ist, mit der Seitenwand der Aufnahme in Kontakt zu kommen, wenn das vorstehende Teil in der Aufnahme aufgenommen ist.

5. Form nach einem der Ansprüche 1 bis 4, **dadurch gekennzeichnet, daß** die Matrize (12) eine Erhöhung (132) aufweist, die sich vom Boden (28) hervorstehend erstreckt und ausgebildet ist, sich in der Nähe der Erhöhung (32) des vorstehenden Teils derart zu erstrecken, daß, wenn das vorstehende Teil in der Aufnahme aufgenommen ist, die Erhöhung (32) des vorstehenden Teils zwischen der Erhöhung (132) der Aufnahme und der Seitenwand (30) der Aufnahme liegt.

6. Form nach Anspruch 5, **dadurch gekennzeichnet, daß** das vorstehende Teil (18) eine zweite Erhöhung (232) aufweist, die sich von der Stirnfläche (20) hervorstehend erstreckt und in der Nähe der ersten Erhöhung (32) des vorstehenden Teils derart angeordnet ist, daß, wenn das vorstehende Teil in der Aufnahme aufgenommen ist, die Erhöhung (132) der Aufnahme zwischen den zwei Erhöhungen (32, 232) des vorstehenden Teils liegt.

7. Form nach einem der Ansprüche 5 bis 6, **dadurch gekennzeichnet, daß** wenigstens eine der Erhöhungen eine ebene Seitenwand (36, 38) aufweist, die senkrecht zur Stirnseite (20) oder zum Boden (28) ist und ausgebildet ist, sich gegenüber einer Seitenwand einer der Erhöhungen zu erstrecken, wenn das vorstehende Teil in der Aufnahme aufgenommen ist.

8. Form nach einem der Ansprüche 5 bis 7, **dadurch gekennzeichnet, daß** zwei der Erhöhungen (32, 132, 232) eine Seitenwand aufweist, die eben und senkrecht zur Stirnseite oder zum Boden sind und ausgebildet sind, sich einander gegenüber derart zu erstrecken, daß, wenn das vorstehende Teil in der Aufnahme aufgenommen ist, die beiden Seiten durch einen zum Boden senkrechten Abstand kleiner als eine Höhe (h) wenigstens einer der Erhöhungen voneinander getrennt sind.

9. Form nach einem der Ansprüche 1 bis 8, **dadurch gekennzeichnet, daß** wenigstens eine der Erhöhungen (32, 132, 232) einen Bereich einer gekrümmten Fläche (40, 42) aufweist, der sich zwischen einer Seitenwand (36, 38) der Erhöhung und dem Boden (28) der Aufnahme oder der Stirnseite (20) erstreckt, wobei dieser Bereich einer gekrümmten Fläche ausgebildet ist, sich gegenüber einer der Erhöhungen zu erstrecken, wenn das vorstehende Teil in der Aufnahme aufgenommen ist.

10. Form nach einem der Ansprüche 1 bis 9, **dadurch gekennzeichnet, daß** die oder wenigstens eine der Erhöhungen (32, 132, 232) einen Scheitel (34) aufweist, der eben und senkrecht zur Gleitrichtung ist.

11. Form nach einem der Ansprüche 1 bis 10, **dadurch gekennzeichnet, daß** die oder wenigstens eine der Erhöhungen (32, 132, 232) eine Breite (1) hat, die kleiner als eine Höhe (h) der Erhöhung ist.

12. Form nach einem der Ansprüche 1 bis 11, **dadurch gekennzeichnet, daß** die oder wenigstens eine der Erhöhungen (32, 132, 232) eine Kante aufweisen, die unmittelbar an einen Scheitel (34) der Erhöhung und an eine Seitenwand (36, 38) der Erhöhung angrenzt, wobei diese Kante einen Krümmungsradius kleiner als 0,5 mal einer Höhe der Erhöhung hat und ausgebildet ist, gegenüber eines Bereiches einer gekrümmten Fläche (31, 40) der Form zu gelangen, wenn das vorstehende Teil in der Aufnahme aufgenommen ist.

13. Verfahren zur Herstellung eines Werkstücks, das ein einen wabenförmigen Kern umfassendes stapelförmiges Material aufweist, mittels einer Form gemäß einer der Ansprüche 1 bis 12, **dadurch gekennzeichnet, daß** das Werkstück mit der Form gebildet wird, wobei die Form vor dem Einbringen des stapelförmigen Materials in die Form Umgebungstemperatur hat.

14. Werkstück (44), insbesondere für ein Fahrzeug, das ein stapelförmiges Material aufweist, welches einen wabenförmigen Kern umfaßt, wobei das Werkstück eine allgemeine ebene Form hat und eine erste Seite (46) und eine zweite Seite (48) aufweist, die im wesentlichen eben sind und jeweils auf der einen und der anderen Seite des Werkstücks einander gegenüber liegen, wobei das Werkstück einen Bereich einer gekrümmten Fläche (50), der unmittelbar an die erste Seite (48) und an einen Rand (54) des Werkstücks angrenzt, und eine Rinne (52) aufweist, die sich in der zweiten Seite (48) in der Nähe des Randes in Richtung der ersten Seite erstreckt, **dadurch gekennzeichnet, daß** der Rand (54) eine äußere Seitenwand (57) aufweist, die eben und senkrecht zur ersten Seite (46) ist und sich in der Verlängerung des Bereichs der gekrümmten Fläche (50) erstreckt.

15. Werkstück nach Anspruch 14, **dadurch gekennzeichnet, daß** die Rinne (52) eine innere Seitenwand (59) aufweist, die eben und parallel zur äußeren Seitenwand (57) des Randes ist und dieser jeweils auf der einen und der anderen Seite des Randes gegenüberliegt und eine innere Seite des Randes bildet.

16. Werkstück nach Anspruch 15, **dadurch gekennzeichnet, daß** die äußeren und inneren Seitenwände (57, 59) des Randes (54) durch einen Abstand kleiner als eine größte Dicke (e) des Werkstückes, die zwischen der ersten und der zweiten Seite des Werkstückes gemessen wird, voneinander getrennt sind.

17. Werkstück nach Anspruch 15 oder 16, **dadurch gekennzeichnet, daß** die äußeren und inneren Seitenwände (57, 59) des Randes (54) durch einen Abstand kleiner als eine Tiefe der Rinne (52) voneinander getrennt sind.

18. Werkstück nach einem der Ansprüche 14 bis 17, **dadurch gekennzeichnet, daß** das Werkstück eine Rinne (152) aufweist, die sich in der ersten Seite (46) in Richtung der zweiten Seite (48) in der Nähe der ersten Rinne (52) erstreckt, wobei die Rinne (152) der zweiten Seite zwischen dem Rand (54) des Werkstücks und der Rinne (52) der ersten Seite liegt.

19. Werkstück nach Anspruch 18, **dadurch gekennzeichnet, daß** das Werkstück eine zweite Rinne (252) aufweist, die sich in der zweiten Seite (48) in Richtung der ersten Seite (46) in der Nähe der ersten Rinne erstreckt, wobei die Rinne (152) der ersten Seite zwischen den zwei Rinnen (250, 252) der zweiten Seite liegt.

20. Werkstück nach einem der Ansprüche 18 oder 19, **dadurch gekennzeichnet, daß** wenigstens zwei der Rinnen (52, 152, 252) senkrecht zu den Seiten des Werkstücks durch einen Abstand (d) kleiner als eine größte Dicke (e) des Werkstücks, die zwischen der ersten und der zweiten Seite des Werkstücks gemessen wird, voneinander getrennt sind.

21. Werkstück nach einem der Ansprüche 14 bis 20, **dadurch gekennzeichnet, daß** die oder wenigstens eine der Rinnen eine innere Seitenwand aufweist, die eben und zu den Seiten des Werkstücks senkrecht ist.

22. Werkstück nach einem der Ansprüche 14 bis 21, **dadurch gekennzeichnet, daß** die oder wenigstens eine der Rinnen einen ebenen Boden aufweist.

23. Werkstück nach einem der Ansprüche 14 bis 22, **dadurch gekennzeichnet, daß** die oder wenigstens eine der Rinnen einen Bereich einer gekrümmten Fläche aufweist, der sich zwischen dem Boden der Rinne und einer Seitenwand der Rinne erstreckt, wobei dieser Bereich einen Krümmungsradius kleiner als 0,5 mal einer Tiefe der Rinne hat.

24. Werkstück nach einem der Ansprüche 14 bis 23, **dadurch gekennzeichnet, daß** der Rand (54) ein Abschlußrand des Werkstücks ist.

25. Sitz für ein Kraftfahrzeug, **dadurch gekennzeichnet, daß** er ein Werkstück nach einem der Ansprüche 14 bis 24 umfaßt.

26. Kofferraumplatte oder Bodenplatte für ein Kraftfahrzeug, **dadurch gekennzeichnet, daß** sie ein Werkstück nach einem der Ansprüche 14 bis 24 umfaßt.

## Claims

1. A mold for forming a stack including a cellular core, the mold comprising a punch (10) and a die (12) that are mounted to slide relative to each other in a sliding direction;
the punch (10) including a projection (18) having a substantially plane leading face (20) perpendicular to the sliding direction, and at least one piece of relief (32) projecting from said face;
the die (12) being provided with a cavity (26) suitable for receiving the projection, and having a substantially plane end wall (28) parallel to the leading face (20) and suitable for extending facing said leading face, the cavity having a side face (30) and a curved surface zone (31) extending between the end wall and the side face; and
the piece of relief (32) being disposed to extend in the vicinity of the curved surface zone (31) and in the vicinity of the side face (30) when the projection (18) is received in the cavity (26);
said mold being **characterized in that** the side face (30) of the cavity is plane and perpendicular to the end wall (28).

2. A mold according to claim 1, **characterized in that** the piece of relief (32) has a plane external side face (38) perpendicular to the leading face (20) and suitable for extending facing the side face (30) of the cavity when the projection is received in the cavity.

3. A mold according to claim 1 or 2, **characterized in that** the piece of relief (32) is disposed so that, when the projection is received in the cavity, the piece of relief is separated from the side face (30) of the cavity by a distance (m) less than the height (h) of the piece of relief.

4. A mold according to any one of claims 1 to 3, **characterized in that** the projection has a plane side face (22) parallel to the side face (30) of the cavity and suitable for coming into contact with said side face of the cavity when the projection is received in the cavity.

5. A mold according to any one of claims 1 to 4, **characterized in that** the die (12) is provided with a piece of relief (132) projecting from the end wall (28) and suitable for extending in the vicinity of the piece of relief (32) on the projection when the projection is received in the cavity, so that the piece of relief (32) on the projection is interposed between the piece of relief (132) in the cavity and the side face (30) of the cavity.

6. A mold according to claim 5, **characterized in that** the projection (18) is provided with a second piece of relief (232) projecting from the leading face (20) and disposed in the vicinity of the first piece of relief (32) on the projection so that, when the projection is received in the cavity, the piece of relief (132) of the cavity is interposed between the two pieces of relief (32, 232) of the projection.

7. A mold according to claim 5 or claim 6, **characterized in that** at least one of the pieces of relief has a plane side face (36, 38) perpendicular to the leading face (20) or to the end wall (28), and suitable for extending facing a side face and facing one of the pieces of relief when the projection is received in the cavity.

8. A mold according to any one of claims 5 to 7, **characterized in that** two of the pieces of relief (32, 132, 232) have respective plane side faces perpendicular to the leading face or to the end wall and suitable for extending facing each other so that, when the projection is received in the cavity, the two faces are separated from each other by a distance perpendicular to the end wall that is less than the height (h) of at least one of the pieces of relief.

9. A mold according to any one of claims 1 to 8, **characterized in that** at least one of the pieces of relief (32, 132, 232) has a curved surface zone (40, 42) extending between a side face (36, 38) of the piece of relief, and the end wall (28) of the cavity or the leading face (20), the curved surface zone being suitable for extending facing one of the pieces of relief when the projection is received in the cavity.

10. A mold according to any one of claims 1 to 9, **characterized in that** said at least one of the pieces of relief (32, 132, 232) has a plane top (34) perpendicular to the sliding direction.

11. A mold according to any one of claims 1 to 10, **characterized in that** said at least one of the pieces of relief (32, 132, 232) has a width (I) less than the height (h) of the piece of relief.

12. A mold according to any one of claims 1 to 11, **characterized in that** said at least one of the pieces of relief (32, 132, 232) has an edge contiguous both with a top (34) of the piece of relief and with a side face (36, 38) of the piece of relief, the edge having a radius of curvature less than 0.5 times the height of the piece of relief, and being suitable for extending facing a curved surface zone (31, 40) of the mold when the projection is received in the cavity.

13. A method of manufacturing a part comprising a stack including a cellular core, by means of a mold according to any one of claims 1 to 12, said method being **characterized in that** the part is formed with the mold, the mold being at ambient temperature before installing, the stack in the mold.

14. A part (44) in particular for a vehicle, the part comprising a stack including a cellular core, the part being plane in overall shape, and having a first face (46) and a second face (48) that are substantially plane and that face in opposite directions from each other on either side of the part, the part having a curved surface zone (50) contiguous with the first face (48) and with a rim (54) of the part, and a trough (52) extending in the second face (48) in the vicinity of said rim towards the first face, said part being **characterized in that** the rim (54) has a plane external side face (57) that is perpendicular to the first face (46), and that extends in alignment with the curved surface zone (50).

15. A part according to claim 14, **characterized in that** the trough (52) has a plane internal side face (59) that is parallel to the external side face (57) of the rim, the internal side face and the external side face being opposite from each other on either side of the rim, and the internal side face constituting an internal face of the rim.

16. A part according to claim 15, **characterized in that** the external and internal side faces (57, 59) of the rim (54) are separated from each other by a distance less than the largest thickness (e) of the part as measured between the first and second faces of the part.

17. A part according to claim 15 or 16, **characterized in that** the external and internal side faces (57, 59) of the rim (54) are separated from each other by a distance less than the depth of the trough (52).

18. A part according to any one of claims 14 to 17, **characterized in that** the part is provided with a trough (152) extending in the first face (46) towards the second face (48) and in the vicinity of the first trough (52), the trough (152) in the second face being interposed between the rim (54) of the part and the trough (52) in the first face.

19. A part according to claim 18, **characterized in that** the part is provided with a second trough (252) extending in the second face (48) towards the first face (46) in the vicinity of the first trough, the trough (152) in the first face being interposed between the two troughs (52, 252) in the second face.

20. A part according to claim 18 or 19, **characterized in that** at least two of the troughs (52, 152, 252) are separated from each other perpendicularly to the faces of the part by a distance (d) less than the largest thickness (e) of the part as measured between the first and second faces of the part.

21. A part according to any one of claims 14 to 20, **characterized in that** said at least one trough has a plane internal side face perpendicular to the faces of the part.

22. A part according to any one of claims 14 to 21, **characterized in that** said at least one trough has a flat end wall.

23. A part according to any one of claims 14 to 22, **characterized in that** said at least one trough has a curved surface zone extending between an end wall of the trough and a side face of the trough, the zone having a radius of curvature less than 0.5 times the depth of the trough.

24. A part according to any one of claims 14 to 23, **characterized in that** the rim (54) is an end rim of the part.

25. A seat for a motor vehicle, said seat being **characterized in that** it includes a part according to any one of claims 14 to 24.

26. A floor or luggage-compartment panel for a motor vehicle, said panel being **characterized in that** it includes a part according to any one of claims 14 to 24.
